# EUROPEAN PATENT APPLICATION

(11) **EP 4 246 646 A1**
(43) Date of publication of application: **20.09.2023**
(21) Application number: 20961600.2
(22) Date of filing: 13.11.2020
(51) Int. Cl.: H01M 10/0569

(54) **LITHIUM SECONDARY BATTERY**

(71) Applicant: TERAWATT TECHNOLOGY K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2020/042366
(87) International publication number: WO 2022/102072

(57) **Abstract**

The purpose of the present invention is to provide a lithium secondary battery having a high energy density and an excellent cycle characteristic. The present invention relates to a lithium secondary battery having a positive electrode, a separator, a negative electrode not having a negative electrode active material, and an electrolyte solution, in which the electrolyte solution contains, as a solvent, at least any one of compounds represented by Formulae (1) to (4).

## Description

### Technical Field

The present invention relates to a lithium secondary battery.

### Background Art

The technology of converting natural energy such as solar light and wind power into electric energy has recently attracted attentions. Under such a situation, various secondary batteries have been developed as a highly-safe power storage device capable of storing a lot of electric energy.

Among them, lithium secondary batteries which charge/discharge by transferring lithium ions between a positive electrode and a negative electrode are known to exhibit a high voltage and high energy density. As the typical lithium secondary battery, a lithium ion secondary battery which contains an active material capable of retaining a lithium element in the positive electrode and the negative electrode, and which charges/discharges by delivering or receiving lithium ions between the positive electrode active material and the negative electrode active material is known.

In addition, for the purpose of high energy density, there has been developed a lithium secondary battery that lithium metal is used as the negative electrode active material, instead of a material into which the lithium element can be inserted, such as a carbon-based material. For example, Patent Document 1 discloses a lithium secondary battery including an ultrathin lithium-metal anode, in which a volume energy density exceeding 1000 Wh/L and/or a mass energy density exceeding 350 Wh/kg is realized at the time of discharge at at least a rate of 1C at room temperature. Patent Document 1 discloses that, in such a lithium secondary battery, charge is performed by a direct precipitation of a new lithium metal on the lithium metal as the negative electrode active material.

For the purpose of further improving high energy density and improving productivity, or the like, a lithium secondary battery which does not use a negative electrode active material has been developed. For example, Patent Document 2 discloses a lithium secondary battery including a positive electrode and a negative electrode, and a separation membrane and an electrolyte interposed therebetween. In the aforesaid negative electrode, metal particles formed on a negative electrode current collector are transferred from the positive electrode when the battery is charged and a lithium metal is formed on the negative electrode current collector in the negative electrode. Patent Document 2 discloses that such a lithium secondary battery shows the possibility of providing a lithium secondary battery which has overcome the problem due to the reactivity of the lithium metal and the problem caused during assembly and therefore has improved performance and service life.

### Citation List

### Patent Documents

Patent Document 1: PCT Japanese Translation Patent Publication No. 2019-517722
Patent Document 2: PCT Japanese Translation Patent Publication No. 2019-537226

### Summary

### Technical Problem

As a result of detailed investigation of conventional batteries including those described in the above patent documents, the present inventors have found that at least either one of their energy density and cycle characteristic is not sufficient.

For example, in the lithium secondary battery which includes a negative electrode having the negative electrode active material, due to the occupation volume or mass of the negative electrode active material, it is difficult to sufficiently increase the energy density and a capacity. In addition, even in an anode free lithium secondary battery of the prior art, which includes a negative electrode not having a negative electrode active material, due to repeated charging/discharging, a dendritic lithium metal is likely to be formed on a surface of the negative electrode, which is likely to cause short circuiting and a decrease in capacity, resulting in insufficient cycle characteristic.

In a lithium-metal secondary battery, a method of applying a large physical pressure on a battery to keep the interface between a negative electrode and a separator at high pressure has also been developed in order to suppress the discrete growth at the time of lithium metal precipitation. Application of such a high pressure however needs a large mechanical mechanism, leading to an increase in the weight and volume of the battery and a reduction in energy density as the entire battery.

The present invention has been made in consideration of the aforesaid problems and a purpose is to provide a lithium secondary battery having a high energy density and excellent in cycle characteristic.

### Solution to Problem

The lithium secondary battery according to one aspect of the present invention has a positive electrode, a separator, a negative electrode not having a negative electrode active material, and an electrolyte solution. The electrolyte solution contains, as a solvent, at least any one of compounds represented by Formulae (1) to (4). 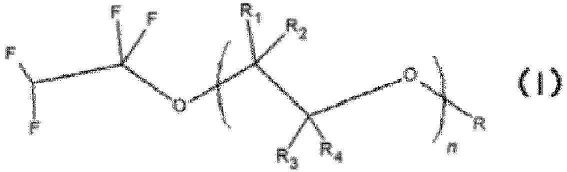 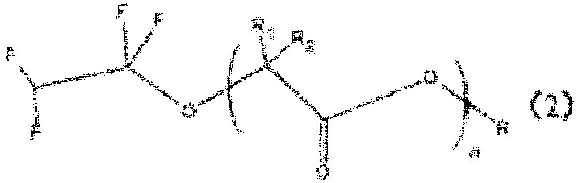 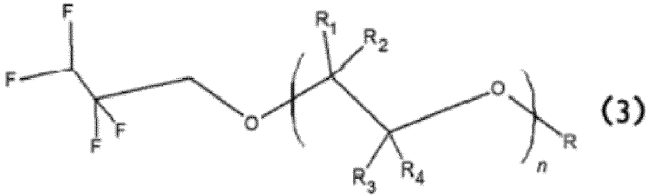 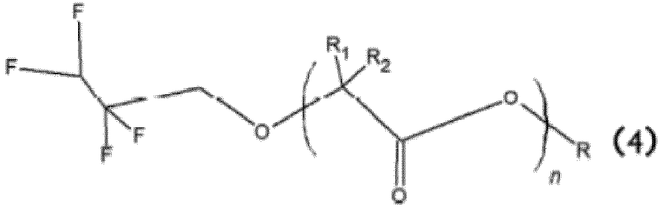 (in the formulae, R₁ to R₄ represent hydrogen, halogen, or a fluorine-substituted, partially substituted, or unsubstituted hydrocarbon group, n is 1 or more, and R represents a fluorine-substituted, partially substituted, or unsubstituted hydrocarbon group)

Such a lithium secondary battery equipped with a negative electrode not having a negative electrode active material has a high energy density because a lithium metal precipitates on the surface of the negative electrode and charge/discharge is performed by the electrolysis and elution of the resulting precipitated lithium metal.

The present inventors have found that, in the lithium secondary battery which contains the aforesaid compounds (1) to (4) as a solvent in the electrolyte solution, a solid electrolyte interfacial layer (the solid electrolyte interfacial layer will hereinafter also be called "SEI layer") is easily formed on the surface of the negative electrode. Because the SEI layer has ionic conductivity, reactivity of lithium precipitation reaction on the surface of the negative electrode, on which the SEI layer is formed, is uniform in a planar direction of the surface of the negative electrode. Therefore, in the aforesaid lithium secondary battery, the growth of the dendritic lithium metal on the negative electrode is suppressed, and the cycle characteristic is excellent. The factor that facilitates the formation of the SEI layer by containing the compounds as a solvent is not always clear, but factors described later can be considered in the embodiment for carrying out the invention.

A content of the compounds is preferably 30 vol.% or more based on a total amount of solvent components in the aforesaid electrolyte solution. In such an aspect, because the SEI layer is more easily formed, the cycle characteristic of the lithium secondary battery is more excellent.

The aforesaid electrolyte solution may further contain a fluorine solvent. In such an aspect, the solubility of the electrolyte in the electrolyte solution tends to be further improved, or the SEI layer tends to be formed more easily, and the cycle characteristic of the lithium secondary battery is more excellent.

The aforesaid electrolyte solution may further contain a non-fluorine solvent. In such an aspect, the solubility of the electrolyte in the electrolyte solution tends to be further improved, or the SEI layer tends to be formed more easily, and the cycle characteristic of the lithium secondary battery is more excellent.

In the aforesaid lithium secondary battery, it is preferable that charge/discharge of lithium secondary battery is performed by dissolution of a lithium metal precipitated on a surface of the negative electrode. In such an aspect, the lithium secondary battery has a higher energy density.

The aforesaid negative electrode is preferably an electrode composed of at least one selected from the group consisting of Cu, Ni, Ti, Fe, and a metal unreactive with Li, alloys with these metals, and stainless steel (SUS). In such an aspect, it has more excellent safety and excellent productivity because it does not need a lithium metal having high flammability for the manufacturing. In addition, such a negative electrode is stable and therefore, a lithium secondary battery obtained using it has an improved cycle characteristic.

The aforesaid lithium secondary battery preferably does not have a lithium foil on a surface of the aforesaid negative electrode before initial charge. In such an aspect, it has more excellent safety and excellent productivity because it does not need a lithium metal having high flammability for the manufacturing.

The aforesaid lithium secondary battery has preferably an energy density of 350 Wh/kg or more.

### Advantageous Effects of Invention

The present invention makes it possible to provide a lithium secondary battery having a high energy density and an excellent cycle characteristic.

### Brief Description of Drawings

Fig. 1 is a schematic cross-sectional view of a lithium secondary battery according to the embodiment of the present invention.
Fig. 2 is a schematic cross-sectional view of the use of the lithium secondary battery according to the embodiment of the present invention.

### Description of Embodiments

The embodiment of the present invention (which will hereinafter be called "present embodiment") will hereinafter be described in detail while referring to the drawings as needed. In the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings.

### [Present embodiment]

### (Lithium secondary battery)

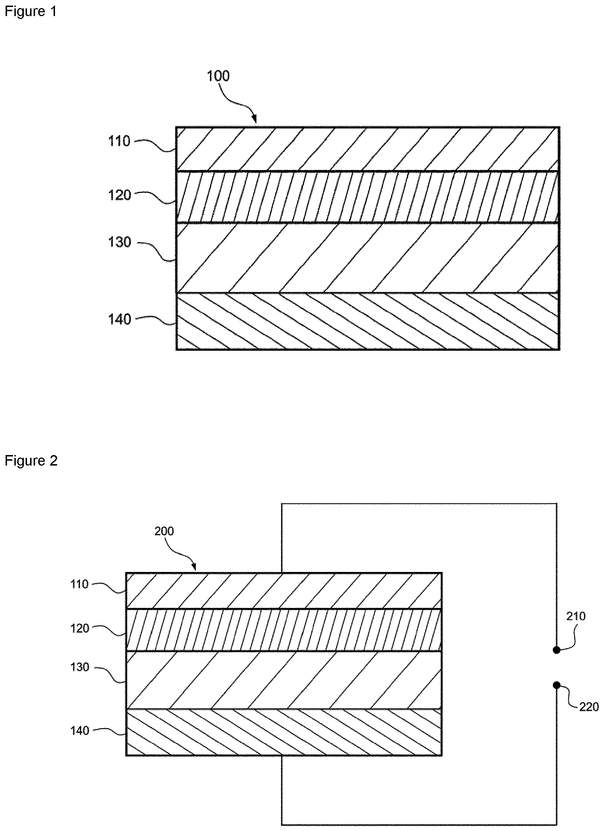

Fig. 1 is a schematic cross-sectional view of the lithium secondary battery in the present embodiment of the present invention. As shown in Fig. 1, the lithium secondary battery 100 in the present embodiment is equipped with a positive electrode 120, a negative electrode 140 not having a negative electrode active material, a separator 130 placed between the positive electrode 120 and the negative electrode 140, and an electrolyte solution that is not shown in Fig. 1. The positive electrode 120 has a positive electrode current collector 110 on the surface thereof opposite to the surface facing the separator 130.

### (Negative electrode)

The negative electrode 140 does not have a negative electrode active material, that is, does not have lithium and an active material which serves as a host for lithium. Therefore, in the lithium secondary battery 100, the volume and mass of the entire battery are reduced as compared with a lithium secondary battery equipped with a negative electrode having a negative electrode active material, and the energy density is high in principle. In the aforesaid lithium secondary battery 100, the lithium metal precipitates on the surface of the negative electrode 140 and the electrolysis and elution of the precipitated lithium metal causes charge/discharge.

In the present embodiment, the term "lithium metal precipitated on the negative electrode" means the lithium metal precipitates on at least one of the surface of the negative electrode or a surface of a solid electrolyte interfacial (SEI) layer formed on the surface of the negative electrode, which will be described later. In the lithium secondary battery in the present embodiment, the lithium metal is presumed to mainly precipitate on the surface of the SEI layer, but the position on which the lithium metal precipitates is not limited to the aforesaid one.

The term "negative electrode active material" as used herein means a material for retaining, on the negative electrode 140, a lithium ion or a lithium metal, and it may be replaced by a host material for a lithium element (typically, lithium metal). Such a retaining mechanism is not particularly limited and examples thereof include intercalation, alloying, and occlusion of metal clusters. Intercalation is typically used.

Such a negative electrode active material is not particularly limited and examples thereof include lithium metal, alloys with lithium metal, carbon-based materials, metal oxides, metals alloyed with lithium, and alloys with the metals. The carbon-based material is not particularly limited and examples thereof include graphene, graphite, hard carbon, mesoporous carbon, carbon nanotube, and carbon nanohorn. The metal oxide is not particularly limited and examples thereof include titanium oxide-based compounds, tin oxide-based compounds, and cobalt oxide-based compounds. Examples of metals alloyed with lithium include silicon, germanium, tin, lead, aluminum, and gallium.

The term negative electrode "does not have a negative electrode active material" as used herein means that the content of a negative electrode active material in the negative electrode is 10 mass% or less based on the total amount of the negative electrode. The content of a negative electrode active material in the negative electrode is preferably 5.0 mass% or less and it may be 1.0 mass% or less, 0.1 mass% or less, or 0.0 mass% or less, each based on the total amount of the negative electrode. Since the negative electrode does not have the negative electrode active material or the content of the negative electrode active material in the negative electrode is within the aforesaid range, the energy density of the lithium secondary battery 100 is high.

More specifically, in the negative electrode 140, regardless of the state of charge of the battery, the content of the negative electrode active material other than lithium metal is 10 mass% or less in the entire negative electrode, preferably 5.0 mass% or less, and may be 1.0 mass% or less, 0.1 mass% or less, or 0.0 mass% or less. In addition, in the negative electrode 140, before initial charge and/or at the end of discharge, the content of lithium metal is 10 mass% or less based on the entire negative electrode, preferably 5.0 mass% or less, and may be 1.0 mass% or less, 0.1 mass% or less, or 0.0 mass% or less.

Accordingly, the term "lithium secondary battery equipped with a negative electrode not having a negative electrode active material" can be replaced by an anode-free secondary battery, a zero-anode secondary battery, or an anode-less secondary battery. In addition, the term "lithium secondary battery equipped with a negative electrode not having a negative electrode active material" may be replaced by "lithium secondary battery equipped with a negative electrode which does not have a negative electrode active material other than lithium metal and does not have a lithium metal before initial charge and/or at the end of discharge" or "lithium secondary battery equipped with a negative electrode current collector which does not have a lithium metal before initial charge and/or at the end of discharge".

The term "before initial charge" of the battery as used herein means a state from the time when the battery is assembled to the time when the battery is first charged. In addition, "at the end of discharge" of the battery means a state in which the battery voltage is 1.0 V or more and 3.8 V or less.

In the lithium secondary battery 100, a ratio M_{3.0}/M_{4.2} of a mass M_{3.0} of lithium metal precipitated on the negative electrode 140 in a state in which the battery voltage is 3.0 V to a mass M_{4.2} of lithium metal precipitated on the negative electrode 140 in a state in which the battery voltage is 4.2 V is preferably 20% or less, more preferably 15% or less, and still more preferably 10% or less.

In a typical lithium secondary battery, the capacity of the negative electrode (capacity of the negative electrode active material) is set to be approximately the same as the capacity of the positive electrode (capacity of the positive electrode active material). However, in the lithium secondary battery 100, since the negative electrode 140 does not have a negative electrode active material which is a host material for a lithium element, it is not necessary to specify its capacity. Therefore, since the lithium secondary battery 100 is not limited by the charge capacity due to the negative electrode, the energy density can be increased in principle.

The negative electrode 140 is not particularly limited insofar as it does not have a negative electrode active material and is usable as a current collector. Examples thereof include materials composed of at least one selected from the group consisting of Cu, Ni, Ti, Fe, and another metal unreactive with Li, alloys therewith, and stainless steels (SUS). When a SUS is used as the negative electrode 140, a variety of conventionally known SUSs can be used as its kind. One or more of the aforesaid negative electrode materials may be used either singly or in combination. The term "metal unreactive with Li" as used herein means a metal which does not form an alloy under the operation conditions of the lithium secondary battery, reacting with a lithium ion or a lithium metal.

The negative electrode 140 is preferably composed of at least one selected from the group consisting of Cu, Ni, Ti, Fe, alloys therewith, and stainless steels (SUS), and more preferably composed of at least one selected from the group consisting of Cu, Ni, alloys therewith, and stainless steels (SUS). The negative electrode 140 is still more preferably Cu, Ni, alloys therewith, or stainless steels (SUS). When such a negative electrode is used, the energy density and productivity of the battery tend to be further improved.

The negative electrode 140 is an electrode not having a lithium metal. Therefore, it can be manufactured without using a highly flammable and highly reactive lithium metal so that the resulting lithium secondary battery 100 has excellent safety, productivity, and cycle characteristic.

The average thickness of the negative electrode 140 is preferably 4 µm or more and 20 µm or less, more preferably 5 µm or more and 18 µm or less, and still more preferably 6 µm or more and 15 µm or less. In such a mode, since the occupation volume of the negative electrode 140 in the lithium secondary battery 100 decreases, the lithium secondary battery 100 has a more improved energy density.

### (Electrolyte solution)

The electrolyte solution contains an electrolyte and a solvent. It is a solution having ionic conductivity and serves as a conductive path of a lithium ion. The separator 130 may be wetted with the electrolyte solution or the electrolyte solution may be sealed together with a laminate of the positive electrode 120, the separator 130, and the negative electrode 140 inside a sealed container.

At least any one of the compounds represented by Formulae (1) to (4) is contained as a solvent. 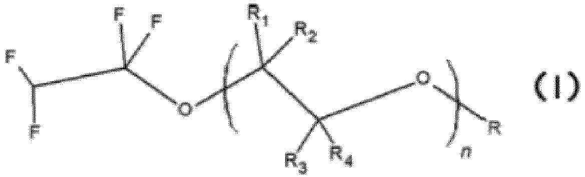 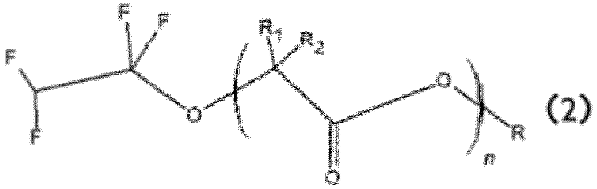 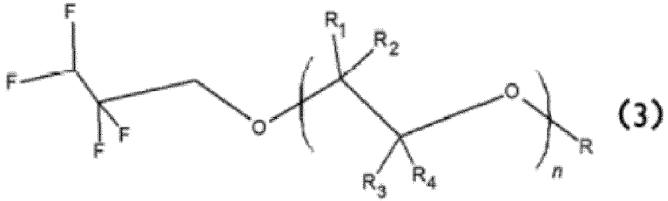 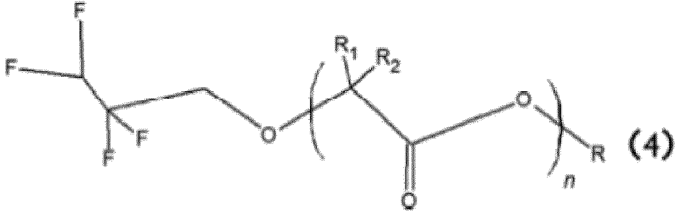 (in the formulae, R₁ to R₄ represent hydrogen, halogen, or a fluorine-substituted, partially substituted, or unsubstituted hydrocarbon group, n is 1 or more, and R represents a fluorine-substituted, partially substituted, or unsubstituted hydrocarbon group)

Generally, in an anode-free lithium secondary battery having the electrolyte solution, the SEI layer is formed on the surface of the negative electrode or the like by decomposing the solvent or the like in the electrolyte solution. Due to the SEI layer in the lithium secondary battery, further decomposition of components in the electrolyte solution, irreversible reduction of lithium ions caused by the decomposition, generation of gas, and the like are suppressed. In addition, because the SEI layer has ionic conductivity, reactivity of lithium precipitation reaction on the surface of the negative electrode, on which the SEI layer is formed, is uniform in a planar direction of the surface of the negative electrode. Therefore, promoting the formation of the SEI layer is very important for improving the performance of the anode-free lithium secondary battery. The present inventors have found that, in the lithium secondary battery containing the aforesaid compounds as a solvent, the SEI layer is easily formed on the surface of the negative electrode, and the growth of dendritic lithium metal on the negative electrode is further suppressed, and as a result, the cycle characteristic is further improved. The factors are not necessarily clear, but the following factors can be considered.

It is considered that not only the lithium ions but also the aforesaid compounds as a solvent are reduced on the negative electrode during charge of the lithium secondary battery 100, particularly during initial charge. The portion represented by Formula (A) and the portion represented by Formula (B) in the compounds (1) to (4) have high reactivity of oxygen atoms due to being substituted with a large number of fluorine. Therefore, it is presumed that a part or all of the portion represented by Formula (A) and the portion represented by Formula (B) are likely to be eliminated. As a result, during charge of the lithium secondary battery 100, a part or all of the portion represented by Formula (A) and the portion represented by Formula (B) are absorbed on the surface of the negative electrode, and since the SEI layer is formed starting from the absorbed portion, it is presumed that the SEI layer is likely to be formed in the lithium secondary battery 100. However, the suppressive factors are not limited to these.

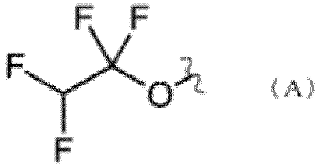

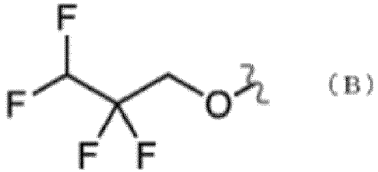

Surprisingly, it is found that the SEI layer formed in the lithium secondary battery 100, which contains any of the aforesaid compounds (1) to (4), has higher ionic conductivity than SEI layers formed in lithium secondary batteries of the prior art. It is considered that this is because the portion represented by Formula (A) and the portion represented by Formula (B) are substituted with fluorine, so that the amount of fluorine in the formed SEI layer is high, and as a result, the transferring path of the lithium ion in the SEI layer is increased or expanded. However, the suppressive factors are not limited to these.

Therefore, in the lithium secondary battery 100, the SEI layer is easily formed, but the internal resistance of the battery is low and the rate capability is excellent. That is, the lithium secondary battery 100 is excellent in cycle characteristic and rate capability. The "rate capability" means a performance capable of charging/discharging with large current, and it is known that the rate capability is excellent when the internal resistance of the battery is low.

A compound "contained as a solvent" as used herein means, in the usage environment of lithium secondary batteries, it is sufficient that the compound alone or a mixture of the compound with other compounds is a liquid, and furthermore, it is sufficient that the electrolyte can be dissolved to form an electrolyte solution in a solution phase.

The compounds (1) to (4) which are used in the present embodiment are classified into (1) a compound which is an ether having a 1,1,2,2-tetrafluoroethyl group in its skeleton, (2) a compound which is an ester having a 1,1,2,2-tetrafluoroethyl group in its skeleton, (3) a compound which is an ether having a 2,2,3,3-tetrafluoropropyl group in its skeleton, and (4) a compound which is an ester having a 2,2,3,3-tetrafluoropropyl group in its skeleton.

The content of the compounds (1) to (4) in the electrolyte solution is not particularly limited, but is preferably 30 vol.% or more based on the total amount of the solvent components in the electrolyte solution, more preferably 40 vol.% or more, still more preferably 50 vol.% or more, even more preferably 60 vol.% or more, even still more preferably 70 vol.% or more. In a case where the content of the compounds is within the aforesaid range, because the SEI layer is more easily formed, the cycle characteristic of the lithium secondary battery 100 is more excellent. The upper limit of the content of the compounds is not particularly limited, and the content of the compounds may be 100 vol.% or less, 95 vol.% or less, 90 vol.% or less, or 80 vol.% or less.

The electrolyte solution may contain a fluorine solvent other than the compounds (1) to (4). The fluorine solvent means a solvent including a compound having an alkyl group substituted with fluorine. As the fluorine solvent, an ether or ester having the structure of Formula (A) or Formula (B) is more preferable. Examples of such a fluorine solvent include 1,1,2,2-tetrafluoroethyl-2,2,3,3-tetrafluoropropyl ether, 1,1,2,2-tetrafluoroethyl-2,2,2-trifluoroethyl ether, methyl-1,1,2,2-tetrafluoroethyl ether, ethyl-1,1,2,2-tetrafluoroethyl ether, propyl-1,1,2,2-tetrafluoroethyl ether, 1H,1H,5H-perfluoropentyl-1,1,2,2-tetrafluoroethyl ether, 1H,1H,5H-octafluoropentyl-1,1,2,2-tetrafluoroethyl ether, difluoromethyl-2,2,3,3-tetrafluoropropyl ether, trifluoromethyl-2,2,3,3-tetrafluoropropyl ether, fluoromethyl-2,2,3,3-tetrafluoropropyl ether, methyl-2,2,3,3-tetrafluoropropyl ether, methyl nonafluorobutyl ether, ethyl nonafluorobutyl ether, methyl-2,2,3,3,3-pentafluoropropyl ether, 1,1,2,3,3,3-hexafluoropropyl methyl ether, ethyl-1,1,2,3,3,3-hexafluoropropyl ether, and tetrafluoroethyl tetrafluoropropyl ether.

The electrolyte solution may further contain a non-fluorine solvent as a co-solvent. The non-fluorine solvent means a solvent including a compound not having an alkyl group substituted with fluorine. Examples of the non-fluorine solvent include dimethyl ether, triethylene glycol dimethyl ether, dimethoxyethane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, and triethyl phosphate. From the standpoint of further improving the solubility of the electrolyte in the electrolyte solution, an ether compound or an ester compound is preferable as the co-solvent.

As the solvent of the electrolyte solution, the aforesaid compounds (1) to (4) and the co-solvent can be freely used in combination, and the compounds (1) to (4) may be used either singly or in combination. The co-solvent may or may not be contained in the electrolyte solution.

When the electrolyte solution contains the co-solvent, the content of the co-solvent is not particularly limited, but is preferably more than 0 vol.% based on the total amount of the solvent components in the electrolyte solution, more preferably 5 vol.% or more, and still more preferably 10 vol.% or more. In a case where the content of the co-solvent is within the aforesaid range, the solubility of the electrolyte in the electrolyte solution tends to be further improved. The content of the co-solvent may be 20 vol.% or more or 30 vol.% or more. In addition, the content of the co-solvent may be 60 vol.% or less, 50 vol.% or less, 40 vol.% or less, or 30 vol.% or less.

There are no particular restrictions on the electrolyte which is contained in the electrolyte solution insofar as it is a salt. Examples of the electrolyte include salts of Li, Na, K, Ca, and Mg. As the electrolyte, a lithium salt is preferred. The lithium salt is not particularly limited and examples thereof include Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNO₃, and Li₂SO₄. From the standpoint of further improving the energy density and cycle characteristic of the lithium secondary battery 100, LiN(SO₂F)₂ or LiBF₂(C₂O₄) is preferable as the lithium salt. In addition, when the electrolyte solution contains at least one of LiN(SO₂F)₂ or LiBF₂(C₂O₄), the formation and growth of the SEI layer on the surface of the negative electrode are further promoted, and this tends to make it possible to obtain a lithium secondary battery 100 having more excellent cycle characteristic. One or more of the aforesaid lithium salts may be used either singly or in combination.

The concentration of the electrolyte in the electrolyte solution is not particularly limited, but is preferably 0.5 M or more, more preferably 0.7 M or more, still more preferably 0.9 M or more, and even more preferably 1.0 M or more. When the concentration of the electrolyte is within the aforesaid range, the SEI layer is more easily formed and the internal resistance tends to be further lowered. In particular, in the lithium secondary battery 100 containing the compounds (1) to (4) as a solvent, the concentration of the electrolyte in the electrolyte solution can be increased, so that the cycle characteristic and rate capability can be further improved. The upper limit of the concentration of the electrolyte is not particularly limited, and the concentration of the electrolyte may be 10.0 M or less, 5.0 M or less, or 2.0 M or less.

The fact that the electrolyte solution contains the compounds can be confirmed by any method common in the art. Examples of such a method include an NMR measurement method, a mass analysis method such as HPLC-MS, and an IR measurement method.

### (Solid electrolyte interfacial layer)

It is presumed that, in the lithium secondary battery 100, the solid electrolyte interfacial layer (SEI layer) is formed on the surface of the negative electrode 140 by charge, particularly initial charge, but the lithium secondary battery 100 may not have the SEI layer. It is presumed that the SEI layer to be formed includes an organic compound derived from at least one of the portion represented by Formula (A) or the portion represented by Formula (B) of the aforesaid compounds (1) to (4), but for example, other lithium-containing inorganic compounds, lithium-containing organic compounds, or the like may be included.

The lithium-containing organic compound and the lithium-containing inorganic compound are not particularly limited insofar as they are included in any well-known SEI layer. Examples of the lithium-containing organic compound include, but are not limited to, organic compounds such as lithium alkyl carbonate, lithium alkoxide, and lithium alkyl ester, and examples of the lithium-containing inorganic compound include, but are not limited to, LiF, Li₂CO₃, Li₂O, LiOH, a lithium borate compound, a lithium phosphate compound, a lithium sulfate compound, a lithium nitrate compound, a lithium nitrite compound, and a lithium sulfite compound.

Because the lithium secondary battery 100 contains the compounds (1) to (4) as a solvent, the formation of the SEI layer is promoted. Because the SEI layer has ionic conductivity, the reactivity of lithium precipitation reaction on the surface of the negative electrode, on which the SEI layer is formed, is uniform in the planar direction of the surface of the negative electrode. Therefore, in the lithium secondary battery 100, the growth of the dendritic lithium metal on the negative electrode is suppressed, and the cycle characteristic is excellent.

The typical average thickness of the SEI layer is 1 nm or more and 10 µm or less. When the SEI layer is formed in the lithium secondary battery 100, the lithium metal precipitated by charging the battery may precipitate at the interface between the negative electrode 140 and the SEI layer, and may precipitate at the interface between the SEI layer and the separator.

### (Positive electrode)

The positive electrode 120 is not particularly limited insofar as it is a positive electrode commonly used in a lithium secondary battery, and a known material can be selected as needed, depending on the use of the lithium secondary battery. From the standpoint of increasing the stability and output voltage of the lithium secondary battery 100, the positive electrode 120 preferably has a positive electrode active material.

In the present specification, the "positive electrode active material" means a material used to retain a lithium element (typically, a lithium ion) in the positive electrode of the battery, and may be replaced by a host material for the lithium element (typically, a lithium ion). Such a positive electrode active material is not particularly limited and examples thereof include metal oxides and metal phosphates. The aforesaid metal oxides are not particularly limited and examples thereof include cobalt oxide-based compounds, manganese oxide-based compounds, and nickel oxide-based compounds. The aforesaid metal phosphates are not particularly limited and examples thereof include iron phosphate-based compounds and cobalt phosphate-based compounds. Examples of typical positive electrode active materials include LiCoO₂, LiNiₓCo_{y}Mn_{z}O₂ (x + y + z = 1), LiNiₓMn_{y}O₂ (x + y = 1), LiNiO₂, LiMn₂O₄, LiFePO₄, LiCoPO₄, FeF₃, LiFeOF, LiNiOF, and TiS₂.

One or more of the aforesaid positive electrode active materials may be used either singly or in combination. The positive electrode 120 may have a component other than the aforesaid positive electrode active material. Such a component is not particularly limited and examples thereof include known conductive additives, binders, solid polymer electrolytes, and inorganic solid electrolytes.

The conductive additive to be contained in the positive electrode 120 is not particularly limited and examples thereof include carbon black, single-wall carbon nanotube (SW-CNT), multi-wall carbon nanotube (MW-CNT), carbon nanofiber, and acetylene black. The binder is not particularly limited and examples thereof include polyvinylidene fluoride, polytetrafluoroethylene, styrene butadiene rubber, acrylic resins, and polyimide resins.

The content of the positive electrode active material in the positive electrode 120 may be, for example, 50 mass% or more and 100 mass% or less based on the entire positive electrode 120. The content of the conductive additive may be, for example, 0.5 mass% or more and 30 mass% or less based on the entire positive electrode 120. The content of the binder in the total amount of the positive electrode 120 may be, for example, 0.5 mass% or more and 30 mass% or less. The total content of the solid polymer electrolyte and the inorganic solid electrolyte may be 0.5 mass% or more and 30 mass% or less based on the entire positive electrode 120.

### (Positive electrode current collector)

The positive electrode 120 has, on one side thereof, a positive electrode current collector 110. The positive electrode current collector 110 is not particularly limited insofar as it is a conductor unreactive with a lithium ion in the battery. Examples of such a positive electrode current collector include aluminum.

The average thickness of the positive electrode current collector 110 is preferably 4 µm or more and 20 µm or less, more preferably 5 µm or more and 18 µm or less, and still more preferably 6 µm or more and 15 µm or less. In such a mode, an occupation volume of the positive electrode current collector 110 in the lithium secondary battery 100 decreases and the resulting lithium secondary battery 100 therefore has a more improved energy density.

### (Separator)

The separator 130 is a member for separating the positive electrode 120 from the negative electrode 140 to prevent a short circuit of the battery and in addition, for securing the ionic conductivity of a lithium ion which serves as a charge carrier between the positive electrode 120 and the negative electrode 140. It is composed of a material not having electron conductivity and unreactive to the lithium ion. The separator 130 also has a role of retaining an electrolyte solution. There are no particular restrictions on the separator 130 insofar as it can play the aforesaid role. The separator 130 can be composed of, for example, a porous polyethylene (PE) film, a polypropylene (PP) film, or a laminated structure thereof.

The separator 130 may be covered with a separator cover layer. The separator cover layer may cover both of the surfaces of the separator 130 or may cover only one of them. The separator cover layer is not particularly limited insofar as it is a member having ionic conductivity and unreactive to a lithium ion and is preferably capable of firmly adhering the separator 130 to a layer adjacent to the separator 130. Such a separator cover layer is not particularly limited and examples thereof include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator cover layer may be a member obtained by adding, to the aforesaid binder, inorganic particles such as silica, alumina, titania, zirconia, magnesium oxide, magnesium hydroxide, or lithium nitrate. The separator 130 includes a separator having a separator cover layer.

The average thickness of the separator 130 is preferably 20 µm or less, more preferably 18 µm or less, and still more preferably 15 µm or less. In such a mode, the occupation volume of the separator 130 in the lithium secondary battery 100 decreases and therefore, the resulting lithium secondary battery 100 has a more improved energy density. The average thickness of the separator 130 is preferably 5 µm or more, more preferably 7 µm or more, and still more preferably 10 µm or more. In such a mode, the positive electrode 120 can be separated from the negative electrode 140 more reliably and a short circuit of the resulting battery can be suppressed further.

### (Use of lithium secondary battery)

Fig. 2 shows one mode of the use of the lithium secondary battery of the present embodiment. The lithium secondary battery 200 has a positive electrode terminal 210 and a negative electrode terminal 220 for connecting the lithium secondary battery 200 to an external circuit and these terminals are bonded to a positive electrode current collector 110 and the negative electrode 140, respectively. The lithium secondary battery 200 is charged/discharged by connecting the negative electrode terminal 220 to one end of the external circuit and the positive electrode terminal 210 to the other end of the external circuit.

The lithium secondary battery 200 is charged by applying a voltage between the positive electrode terminal 210 and the negative electrode terminal 220 to cause a current flow from the negative electrode terminal 220 to the positive electrode terminal 210 through the external circuit. In the lithium secondary battery 200, it is presumed that the solid electrolyte interfacial layer (SEI layer) is formed on the surface of the negative electrode 140 (at the interface between the negative electrode 140 and the separator 130) by initial charge, but the lithium secondary battery 200 may not have the SEI layer. By charging the lithium secondary battery 200, the lithium metal precipitates on the interface between the negative electrode 140 and the SEI layer, on the interface between the negative electrode 140 and the separator 130, and/or on the interface between the SEI layer and the separator 130.

When the positive electrode terminal 210 and the negative electrode terminal 220 are connected to the charged lithium secondary battery 200, the lithium secondary battery 200 is discharged. As a result, the precipitation of the lithium metal generated on the negative electrode is electrolytically eluted. When the SEI layer is formed in the lithium secondary battery 200, the precipitation of lithium metal generated at least at the interface between the negative electrode 140 and the SEI layer and/or the interface between the SEI layer and the separator 130 is electrolytically eluted.

### (Method of manufacturing lithium secondary battery)

A method of manufacturing the lithium secondary battery 100 as shown in Fig. 1 is not particularly limited insofar as it can provide a lithium secondary battery equipped with the aforesaid configuration and examples of the method include the method as follows.

The positive electrode current collector 110 and the positive electrode 120 are manufactured, for example, in the following manner. Such a positive electrode active material as mentioned above, a known conductive additive, and a known binder are mixed together to obtain a positive electrode mixture. The mixing ratio of them may be, for example, 50 mass% or more and 99 mass% or less of the positive electrode active material, 0.5 mass% or more and 30 mass% or less of the conductive additive, and 0.5 mass% or more and 30 mass% or less of the binder based on the entire positive electrode mixture. The positive electrode mixture thus obtained is applied to one of the surfaces of a metal foil (for example, Al foil) serving as a positive electrode current collector and having a predetermined thickness (for example, 5 µm or more and 1 mm or less), followed by press molding. The resulting molded material is punched into a predetermined size to obtain a positive electrode current collector 110 and a positive electrode 120.

Next, the aforesaid negative electrode material, for example, a metal foil (such as an electrolytic Cu foil) having a thickness of 1 µm or more and 1 mm or less is washed with a sulfamic-acid-containing solvent, punched into a predetermined size, ultrasonically washed with ethanol, and then dried to obtain a negative electrode 140.

Next, a separator 130 having the aforesaid configuration is prepared. As the separator 130, a separator manufactured by a conventionally known method or a commercially available one may be used.

Next, a solution obtained by mixing at least one kind of the aforesaid compounds (1) to (4), and as necessary, the aforesaid co-solvent is prepared as a solvent, and the electrolyte solution is prepared by dissolving an electrolyte such as a lithium salt in this solution. The mixing ratio of the solvent and the electrolyte may be appropriately adjusted so that the type of each solvent and electrolyte, and the content or concentration in the electrolyte solution are within the aforesaid ranges.

The positive electrode current collector 110 on which the positive electrode 120 is formed, the separator 130, and the negative electrode 140 obtained as described above are laminated in this order such that the positive electrode 120 faces the separator 130 to obtain a laminate. The stacked body thus obtained is encapsulated, together with the electrolyte solution in a hermetically sealing container to obtain a lithium secondary battery 100. The hermetically sealing container is not particularly limited and examples thereof include a laminate film.

### [Modification example]

The aforesaid present embodiments are examples for describing the present invention. They do not intend to limit the present invention only thereto and the present invention may have various modifications without departing from the gist thereof.

For example, in the lithium secondary battery 100 in the present embodiment, each component may not be formed as a laminate, but may be fixed at a distance and filled with the electrolyte solution.

In the lithium secondary battery 100, for example, an auxiliary member that assists the precipitation and/or dissolution of lithium metal between the separator 130 and the negative electrode 140 during charging/discharging may be provided. Examples of such an auxiliary member include members containing a metal which is alloyed with the lithium metal, and may be, for example, a metal layer formed on the surface of the negative electrode 140. Examples of such a metal layer include layers containing at least one selected from the group consisting of Si, Sn, Zn, Bi, Ag, In, Pb, Sb, and Al. The average thickness of the metal layer may be, for example, 5 nm or more and 500 nm or less.

In this mode of including the auxiliary member in the aforesaid lithium secondary battery 100, because affinity between the negative electrode and the lithium metal precipitated on the negative electrode is further improved, peeling of the lithium metal precipitated on the negative electrode is further suppressed, and the cycle characteristic tends to be further improved. The auxiliary member may contain the metal which is alloyed with the lithium metal, but the capacity thereof is sufficiently smaller than the capacity of the positive electrode. In a typical lithium ion secondary battery, the capacity of the negative electrode active material contained in the negative electrode is set to be about the same as the capacity of the positive electrode, but because the capacity of the auxiliary member is sufficiently smaller than the capacity of the positive electrode, the lithium secondary battery 100 including such an auxiliary member can be said to "have a negative electrode not having a negative electrode active material". Therefore, the capacity of the auxiliary member may be sufficiently smaller than the capacity of the positive electrode 120, and may be, for example, 20% or less, 15% or less, 10% or less, or 5% or less.

In the lithium secondary batteries in the present embodiments, there may be no lithium foil to be formed between the separator and the negative electrode before the initial charge. When the lithium foil is not formed between the separator and the negative electrode in the lithium secondary battery in the present embodiments before the initial charge, highly flammable lithium metal is not used during manufacturing, and the lithium secondary battery with better safety and higher productivity is realized.

In the lithium secondary battery 100, a terminal for connecting to an external circuit may be attached to the positive electrode current collector and/or the negative electrode. For example, a metal terminal (for example, Al, Ni, or the like) having a length of 10 µm or more and 1 mm or less may be bonded to one or both of the positive electrode current collector and the negative electrode. For bonding, a conventionally known method may be used and for example, ultrasonic welding is usable.

The term "an energy density is high" or "has a high energy density" as used herein means that the capacity of a battery per total volume or total mass is high. It is preferably 800 Wh/L or more or 350 Wh/kg or more, more preferably 900 Wh/L or more or 400 Wh/kg or more, and still more preferably 1000 Wh/L or more or 450 Wh/kg or more.

The term "having an excellent cycle characteristic" as used herein means that a decreasing ratio of the capacity of a battery is small before and after the expected number of charging/discharging cycles in ordinary use. Described specifically, it means that when a first discharge capacity after the initial charging/discharging and a capacity after the number of charging/discharging cycles expected in ordinary use are compared, the capacity after charging/discharging cycles has hardly decreased compared with the first discharge capacity after the initial charging/discharging. The "number expected in ordinary use" varies depending on the usage of the lithium secondary battery and it is, for example, 30 times, 50 times, 70 times, 100 times, 300 times, or 500 times. The term "capacity after charging/discharging cycles hardly decreased compared with the first discharge capacity after the initial charging/discharging" means, though differing depending on the usage of the lithium secondary battery, that the capacity after charging/discharging cycles is, for example, 60% or more, 65% or more, 70% or more, 75% or more, 80% or more, or 85% or more, each in the first discharge capacity after the initial charging/discharging.

### Examples

The present invention will hereinafter be described in detail by Examples and Comparative Examples. The present invention is not limited by the following Examples.

### [Example 1]

A lithium secondary battery was produced as follows.

First, 10 µm electrolytic Cu foil was washed with a sulfamic-acid-containing solvent, punched into a predetermined size (45 mm × 45 mm), ultrasonically washed with ethanol, and then dried. Thereafter, the Cu foil was degreased, washed with pure water, and then immersed in a plating bath containing Sb ions. The surface of the Cu foil was electrolytically plated while the Cu foil was allowed to stand horizontally, thereby plating the surface of the Cu foil with Sb to be a metal layer having a thickness of 100 nm. The Cu foil was taken out from the plating bath, washed with ethanol, and washed with pure water. The Cu foil coated with the Sb thin film was used as a negative electrode.

A positive electrode was produced. A mixture of 96 parts by mass of LiNi_{0.85}Co_{0.12}Al_{0.03}O₂ as a positive electrode active material, 2 parts by mass of carbon black as a conductive additive, and 2 parts by mass of polyvinylidene fluoride (PVDF) as a binder was applied onto one side of a 12 µm Al foil, followed by pressing molding. The resulting molded material was punched into a predetermined size (40 mm × 40 mm) to obtain a positive electrode.

As a separator, a separator having a predetermined size (50 mm × 50 mm), in which both surfaces of a 12 µm polyethylene microporous film were coated with a 2 µm-thick polyvinylidene fluoride (PVDF), was prepared.

An electrolyte solution was prepared as follows. In Example 1, only 1,1,2,2-tetrafluoroethoxymethoxyethane was used as a first solvent (main solvent). An electrolyte solution was obtained by dissolving LiN(SO₂F)₂ in this solvent so that the molar concentration of the electrolyte becomes 1.25 M.

The positive electrode current collector on which the positive electrode was formed, the separator, and the negative electrode obtained as described above were laminated in this order such that the positive electrode faced the separator to obtain a laminate. A 100 µm Al terminal and a 100 µm Ni terminal were connected to the positive electrode current collector and the negative electrode by ultrasonic welding, respectively, and then the laminate was inserted into a laminated outer casing. Next, the electrolyte solution obtained as described above was injected into the aforesaid outer casing. The resulting outer container was hermetically sealed to obtain a lithium secondary battery.

### [Examples 2 to 24]

Lithium secondary batteries were obtained in the same manner as in Example 1, except that the electrolyte solutions were prepared using the solvents and electrolytes (lithium salts) described in Table 1.

In Table 1, "TTFE" represents 1,1,2,2-tetrafluoroethyl-2,2,3,3-tetrafluoropropyl ether, "TFEE" represents 1,1,2,2-tetrafluoroethyl-2,2,2-trifluoroethyl ether, and "DME" represents dimethoxyethane, "TGM" represents triethylene glycol dimethyl ether, and "EA" represents ethyl acetate.

In Table 1, the first solvent (main solvent) is a compound corresponding to the aforesaid compounds (1) to (4), the second solvent is a non-fluorine solvent as a co-solvent, and the third solvent is a fluorine solvent other than the compounds (1) to (4) as a co-solvent. In addition, in the table, the co-solvent is described in terms of amount as vol.% together with its type, and each lithium salt is described in terms of concentration as volume molar concentration (M) together with its type. The content of the first solvent which is the main solvent is not described in the table, but the content of the first solvent corresponds to a content (balance) obtained by subtracting the contents of the second solvent and the third solvent from 100%.

### [Comparative Examples 1 and 2]

Lithium secondary batteries were obtained in the same manner as in Example 1, except that the electrolyte solutions were prepared using the solvent described in Table 1. In Comparative Examples 1 and 2, solvents not containing the compounds (1) to (4) were used.

The characteristics of the lithium secondary batteries produced in the examples and the comparative examples were evaluated as follows.

### [Capacity and cycle characteristic]

The produced lithium secondary battery was CC-charged at 3.2 mA until the voltage reached 4.2 V (initial charge), and then CC-discharged at 3.2 mA until the voltage reached 3.0 V (which will hereinafter be called "initial discharge"). Next, a cycle of CC-charging at 13.6 mA until the voltage reached 4.2 V and then CC-discharging at 20.4 mA until the voltage reached 3.0 V was repeated at a temperature of 25°C. Tables 1 to 14 show the capacity (which will hereinafter be called "initial capacity") obtained from the initial discharging for each example. For the examples, the number of cycles (referred to as "Cycle" in the table) when the discharge capacity reached 80% of the initial capacity is shown in Table 1.

### [Direct current resistance (DCR)]

The produced lithium secondary battery was CC-charged at 5.0 mA to 4.2 V, and then CC-discharged at 30 mA, 60 mA, and 90 mA for 30 seconds, respectively. At this time, the lower limit voltage was set to 2.5 V, but this is an installation value and does not actually reach this point. In addition, between each discharging, CC-charging was performed again at 5.0 mA to 4.2 V, and the next CC-discharging was performed after the charging was completed. The direct current resistance (DCR) (unit: Ω) was obtained from the gradient of I-V characteristic obtained plotting a current value I and a voltage drop V obtained as described above, and linearly approximating each point.

**[Table 1]**

| | Composition of electrolyte solution | | | | Characteristics | | |
|---|---|---|---|---|---|---|---|
| | Salt concentration | First solvent | Second solvent | Third solvent | Capacity mAh | DCR Ω | Cycle |
| Example 1 | 1.25 M | 1,1,2,2-Tetrafluoroethoxymethoxyethane | Non | Non | 69 | 405 | 155 |
| Example 2 | 1.25 M | 1,1,2,2-Tetrafluoroethoxymethoxyethane | DME: 20 % | Non | 68 | 4 | 166 |
| Example 3 | 1.25 M | 1,1,2,2-Tetrafluoroethoxymethoxyethane | DME: 10% | TTFE: 20% | 67 | 4.1 | 172 |
| Example 4 | 2M | 1,1,2,2-Tetrafluoroethoxymethoxyethane | DME: 10% | TFEE: 20% | 67 | 4.2 | 176 |
| Example 5 | 1.25 M | 1,1,2,2-Tetrafluoroethoxymethoxyethane | EA: 10% | TFEE: 20% | 66 | 4.3 | 178 |
| Example 6 | 1.25 M | 1,1,2,2-Tetrafluoroethoxymethoxyethane | TGM: 10% | TFEE: 20% | 69 | 3.96 | 177 |
| Example 7 | 1.25 M | 1,1,2,2-tetrafluoroethyl 2,2,3,3-tetrafluoropropanoate | Non | Non | 68 | 4.1 | 180 |
| Example 8 | 1.25 M | 1,1,2,2-Tetrafluoroethoxy-1,1,1-trifluoromethoxyethane | Non | Non | 67 | 4.2 | 177 |
| Example 9 | 1.25 M | 1,1,2,2-Tetrafluoroethoxy-1,1,1-trifluoromethoxybuthane | Non | Non | 68 | 4.3 | 179 |
| Example 10 | 1.25 M | 1,1,2,2-Tetrafluoroethoxymethoxypropane | Non | Non | 67 | 4.8 | 177 |
| Example 11 | 1.25 M | 1,1,2,2-tetrafluoroethyl difluoroacetate | Non | Non | 68 | 3.98 | 178 |
| Example 12 | 1.25 M | 1,1,2,2-tetrafluoroethyl 3,3-difluoropropanoate | Non | Non | 67 | 3.99 | 188 |
| Example 13 | 1.25 M | 1,1,1,2-Tetrafluoropropoxy-1-fluoromethoxyethane | Non | Non | 67 | 405 | 185 |
| Example 14 | 1.25 M | 1,1,1,2-Tetrafluoropropoxy-1,1-difuluoromethoxyethane | Non | Non | 66 | 4.3 | 167 |
| Example 15 | 1.25 M | 1,4,4,7,7,10,10,12,12,13,13-undecafluoro-2,5,8,11-tetraoxatridecane | DME:10% | Non | 69 | 3.6 | 169 |
| Example 16 | 1.25 M | 1-{2-[2-(difluoromethoxy)-1,1-difluoroethoxy]-1,1-difluoroethoxy}-1,1,2,2-tetrafluoroethane | DME:10% | Non | 68 | 3.65 | 172 |
| Example 17 | 1.25 M | 1-(difluoromethoxy)-2-fluoro-2-[2-fluoro-2-(1,1,2,2-tetrafluoroethoxy)propoxy]propane | DME:10% | Non | 67 | 3.7 | 178 |
| Example 18 | 1.25 M | 3-(difluoromethoxy)-1,1,2-trifluoro-2-[2,3,3-trifluoro-2-(1,1,2,2-tetrafluoroethoxy)propoxy]propane | Non | Non | 67 | 3.76 | 180 |
| Example 19 | 1.25 M | 3-(difluoromethoxy)-1,1,2-trifluoro-2-[2,3,3-trifluoro-2-(1,1,2,2-tetrafluoroethoxy)propoxy]propane | DME:10% | Non | 66 | 3.78 | 182 |
| Example 20 | 1.25 M | 3-(difluoromethoxy)-1,1,2-trifluoro-2-{[3,4,4-trifluoro-3-(1,1,2,2-tetrafluoroethoxy)butan-2-yl]oxy}butane | Non | Non | 69 | 3.9 | 183 |
| Example 21 | 1.25 M | 3-[2-(difluoromethoxy)-1,2-difluoroethoxy]-1,1,2,2-tetrafluoropropane | Non | Non | 67 | 405 | 177 |
| Example 22 | 1.25 M | 3-{2-[2-(difluoromethoxy)-1,2-difluoroethoxy]-1,2-difluoroethoxy}-1,1,2,2-tetrafluoropropane | Non | Non | 68 | 4.1 | 178 |
| Example 23 | 1.25 M | difluoromethyl fluoro(2,2,3,3-tetrafluoropropoxy)acetate | Non | Non | 66 | 3.95 | 168 |
| Example 24 | 1.25 M | difluoromethyl fluoro{[fluoro(2,2,3,3-tetrafluoropropoxy)acetyl]oxy}acetate | Non | Non | 68 | 3.7 | 169 |
| Comparative Example 1 | 6M | dimethoxyethane (DME) | | | 68 | 3.68 | 40 |
| Comparative Example 2 | 5M | ethyl acetate (EA) | | | 67 | 3.88 | 33 |

In Table 1, "Non" means that the corresponding component was not contained.

From Table 1, in Examples 1 to 24 in which the compounds represented by Formulae (1) to (4) were contained as the solvent, as compared with Comparative Examples 1 and 2 in which the compound was not contained, it was found that the number of cycles was very high and the cycle characteristic was excellent. In addition, in Examples 1 to 24, it was found that the direct current resistance value was lower than the direct current resistance value expected from the very high cycle characteristic, and the direct current resistance value was equivalent to the direct current resistance values of Comparative Examples 1 and 2. From this, in Examples 1 to 24, it was found that the rate capability was also excellent with the excellent cycle characteristic.

### Industrial Applicability

The lithium secondary battery of the present invention has a high energy density and an excellent cycle characteristic so that it has industrial applicability as a power storage device to be used for various uses.

### Reference Signs List

- 100, 200: lithium secondary battery
- 110: positive electrode current collector
- 120: positive electrode
- 130: separator
- 140: negative electrode
- 210: positive electrode terminal
- 220: negative electrode terminal

## Claims

1. A lithium secondary battery, comprising:
a positive electrode,
a separator,
a negative electrode not having a negative electrode active material, and
an electrolyte solution,
wherein the electrolyte solution contains, as a solvent, at least any one of compounds represented by Formulae (1) to (4), 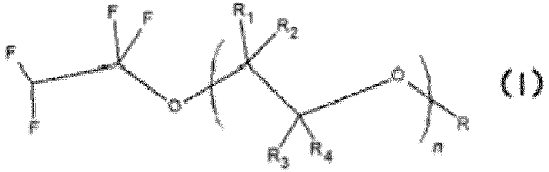 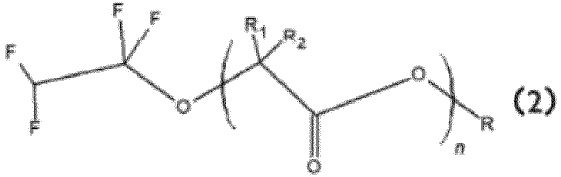 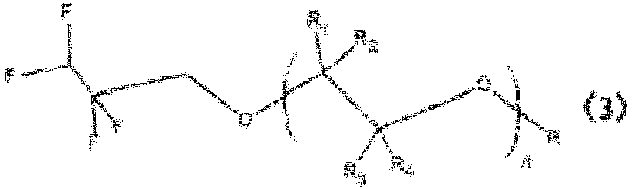 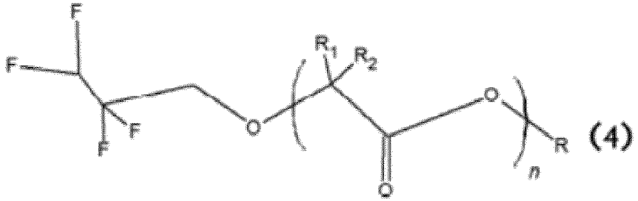
(in the formulae, R₁ to R₄ represent hydrogen, halogen, or a fluorine-substituted, partially substituted, or unsubstituted hydrocarbon group, n is 1 or more, and R represents a fluorine-substituted, partially substituted, or unsubstituted hydrocarbon group).

2. The lithium secondary battery according to claim 1, wherein a content of the compounds represented by Formulae (1) to (4) is 30 vol.% or more based on a total amount of solvent components in the electrolyte solution.

3. The lithium secondary battery according to claim 1 or 2, wherein the electrolyte solution further contains a fluorine solvent other than the compounds represented by Formulae (1) to (4).

4. The lithium secondary battery according to any one of claims 1 to 3, wherein the electrolyte solution further contains a non-fluorine solvent.

5. The lithium secondary battery according to any one of claims 1 to 4, wherein charge/discharge of the lithium secondary battery is performed by electrolysis and elution of a lithium metal precipitated on a surface of the negative electrode.

6. The lithium secondary battery according to any one of claims 1 to 5, wherein the negative electrode is an electrode composed of at least one selected from the group consisting of Cu, Ni, Ti, Fe, and a metal unreactive with Li, alloys with these metals, and stainless steel (SUS).

7. The lithium secondary battery according to any one of claims 1 to 6, wherein the negative electrode does not have a lithium foil on a surface of the negative electrode before initial charge.

8. The lithium secondary battery according to any one of claims 1 to 7, wherein the battery has an energy density of 350 Wh/kg or more.
